Europäisches Patentamt

(19) European Patent Office

Office européen des brevets

(11) Publication number: **0 084 562**
**B1**

(12) **EUROPEAN PATENT SPECIFICATION**

(45) Date of publication of patent specification: **18.03.87**

(21) Application number: **82902627.7**

(22) Date of filing: **28.07.82**

(86) International application number:
**PCT/US82/01025**

(87) International publication number:
**WO 83/00588 17.02.83 Gazette 83/05**

(51) Int. Cl.⁴: **H 03 B 19/00, H 03 M 1/00, H 04 Q 1/457, G 06 F 15/20, G 06 F 15/353**

(54) **MULTI-TONE SIGNAL GENERATOR.**

(30) Priority: **03.08.81 US 289624**

(43) Date of publication of application:
**03.08.83 Bulletin 83/31**

(45) Publication of the grant of the patent:
**18.03.87 Bulletin 87/12**

(84) Designated Contracting States:
**DE FR GB NL**

(56) References cited:
**US-A-3 500 213**
**US-A-3 657 657**
**US-A-4 053 839**
**US-A-4 056 692**
**US-A-4 070 709**
**US-A-4 132 871**
**US-A-4 134 072**
**US-A-4 142 184**
**US-A-4 192 007**
**US-A-4 320 522**
**US-A-4 346 448**
**US-A-4 349 704**

(73) Proprietor: **MOTOROLA, INC.**
**1303 East Algonquin Road**
**Schaumburg, Illinois 60196 (US)**

(72) Inventor: **LABEDZ, Gerald Paul**
**3909 North Oakley**
**Chicago, IL 60618 (US)**

(74) Representative: **Hudson, Peter David et al**
**Motorola Ltd. Patent and Licensing Operations -**
**Europe Jays Close Viables Industrial Estate**
**Basingstoke Hampshire RG22 4PD (GB)**

Courier Press, Leamington Spa, England.

## Description

### Background of the Invention

#### 1. Field of the Invention

This invention relates generally to the electronic tone generating art and in particular to an improved method for generating a multi-tone signal.

#### 2. Description of the Prior Art

Multi-tone systems are presently in wide use in communication systems. For example, multi-tone telephone dialing systems employ a three by four switching matrix for selecting a composite audio signal comprised of one of four lower band frequencies and one of three upper band frequencies. Typically, these seven frequencies are substantially sinusoidal wave forms generated by hand wired conventional analog audio oscillators. These systems are subject to becoming detuned by shock or vibration and performance can vary with environmental factors such as temperature and humidity. In addition, these systems are relatively expensive to fabricate and require precision circuit elements. Some of these problems have been circumvented by digitally synthesizing, either in discrete logic or in a microprocessor, the multi-tone signals and then combining them. This however is expensive because of the complexity and the processing load required for generating the tones individually. Although it has been recognized that reduction of the processing load for synthesis in these systems would permit reduced expense and the use of smaller processing units no effective means for such reduction has heretofore been devised.

From US Patent No. 4134072 there is known a multi-tone signal generator for producing a signal composed of a plurality of desired frequencies, said generator comprising: generating means for generating a sequence of digital words, each word corresponding to the magnitude of a sample of a substantially periodic waveform at one of the desired frequencies; and converter means coupled to the generating means for converting the sequence of digital words to an analog waveform.

### Summary of the Invention

It is an object of this invention, therefore, to provide an improved multi-tone generating method that utilizes digital techniques with reduced processing requirements and reduced susceptibility to vibrations.

It is another object of this invention to provide an improved multi-tone generator which is particularly adapted for implementation in a microprocessor and which greatly reduces processing requirements.

It is yet another object of this invention to provide an improved multi-tone generator which is programmable.

In accordance with a first aspect of the invention said generating means is adapted to generate the sequence of digital words at a sample rate less than the Nyquist rate for the highest desired frequency such that the frequency components generated include all the desired frequencies.

In accordance with a second aspect of the invention a method of generating a multi-tone signal composed of a plurality of desired sinusoidal frequencies, comprising the steps of generating digitized samples of the desired sinusoidal frequencies; and converting the digitized samples to an analog waveform is characterized in that the step of generating comprises generating digitized samples of one of the desired sinusoidal frequencies at a sample rate less than the Nyquist rate for the highest desired frequency such that the frequency components generated include all the desired frequencies.

### Brief Description of the Drawings

The features of the present invention which are believed to be novel are set forth with particularity in the appended claims. The invention, together with further objects and advantages thereof, may best be understood by reference to the following description when taken in conjunction with the accompanying drawings.

Figure 1 is a block diagram illustrating one embodiment of the inventive multi-tone generator according to the invention.

Figure 2 is a block diagram illustrating a microcomputer implementation of the preferred embodiment of the invention.

Figure 3 is an overall program flow diagram of the computer program for the invention.

### Detailed Description of the Preferred Embodiment

The principal of operation of the preferred embodiment of the invention is to generate two tones of desired frequencies $f_1$ and $f_2$ by generating digital samples of a sinusoidal waveform of one of the frequencies at a sample rate less than the Nyquist rate for the highest desired frequency. It is widely known in the art that to properly represent some band limited analog waveform digitally, the samples must occur at twice the highest frequency to be represented (i.e., the Nyquist rate). For the two tone generator, a phase accumulator frequency synthesizer is utilized to generate digital samples of the higher frequency, $f_2$, but at a sample rate well under two times $f_2$. If the sample rate is chosen to be $f_s = f_2 + f_1$, then strong spectral components are generated at the desired frequencies of $f_2$ and $f_1$. In addition, many higher frequency components are generated, which are filtered out by means of a low pass filter. The result is generation of a signal composed of the two desired frequencies, while utilizing a lower sample rate and only a single synthesizer, thereby reducing speed requirements and complexity.

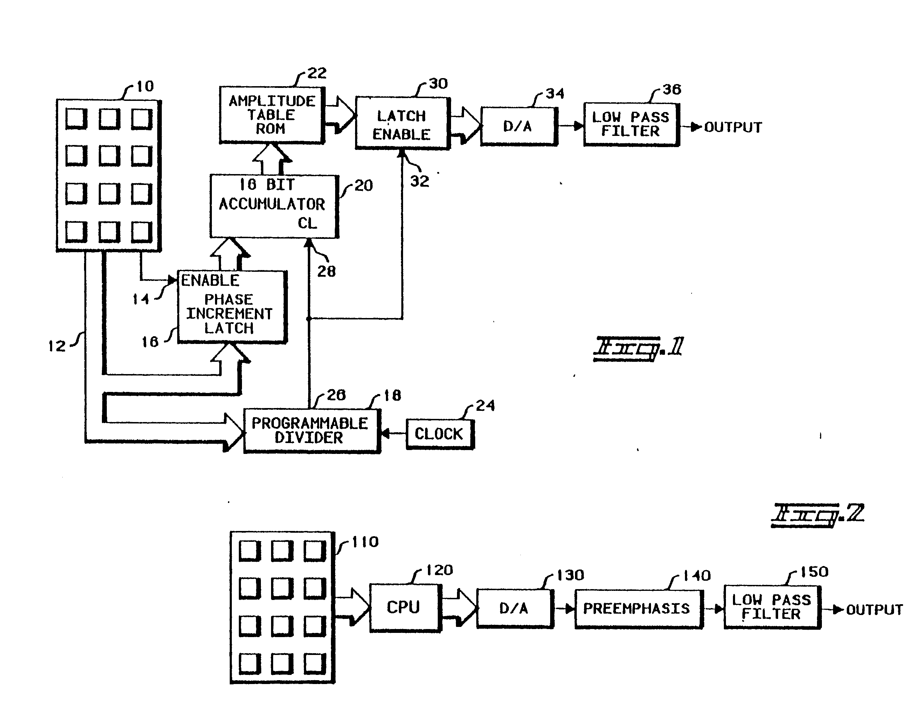

Referring to Figure 1, there is shown a block diagram of a discrete circuit embodiment of the inventive multi-tone generator. An input device 10 is provided to permit selection of the desired frequencies (designated $f_1$, and $f_2$). Many common input devices can be used, such as a set of binary switches, a multi-tone telephone key pad or even a voice input device. In the latter examples, conventional decoding circuitry would be required. The data from this input device determines the frequencies $f_1$ and $f_2$ generated, and is applied to the data bus 12. Part of the data is coupled to a latch 16, and the remainder of the data is coupled to a programmable divider 18, as shown. In addition, an enable pulse is coupled from the input device 10 to the enable input 14 of the latch 16 when new data is entered. The latch 16 and the divider 18 together with a 16 bit accumulator 20 and a read only memory (ROM) 22, configured as shown, form a phase accumulator sine wave synthesizer. The data is composed of a phase increment which is coupled to the latch 16 and stored in response to the enable pulse, and programming data which is coupled to the programmable divider 18. The phase increment is a value equal to $f_2/f_s$ which is stored in latch 16 when coupled from the input device 10. Clock pulses from a clock 24 are coupled, as shown, to the programmable divider 18. The divider 18 is programmed by the data from the input device 10 to produce output pulses at the terminal 26 having the desired sample frequency $f_s$. These pulses are coupled, as shown, to the clock input 28 of the accumulator 20, and to the enable input 32 of a latch 30. Each pulse causes the phase increment stored in the latch 16 to be added to the contents of the accumulator 20. The eight most significant bits of the accumulator 20 are then coupled, as shown, to the address input of the ROM 22 which contains a table of amplitude samples of a sinusoidal waveform. The amplitude addressed by the contents of the accumulator 20 is coupled from the ROM 22 to the latch 30 where it is stored in response to the enable pulse coupled to the enable input 32 from the divider 26, as shown. The sample stored in the latch 30 is coupled to a D/A converter 34 of conventional design and converted to analog form. The result is an analog waveform, generated at a sample rate $f_s = f_1 + f_2$, which contains the frequency components $f_1$ and $f_2$, as well as many higher frequency components. This analog waveform is coupled through a low-pass filter 36 to remove the higher frequency components, thereby resulting in a multi-tone signal of frequencies $f_1$ and $f_2$. Additional filtering may be used to provide pre-emphasis, if desired.

It should be noted that signals of any number of tones can be generated using this method. For example, the next higher frequency generated by the generator of Figure 1 is $f_s = f_1$. Thus, if three frequencies are desired, the sample frequency $f_s$ and the frequencies $f_1$ and $f_2$ would be chosen to generate the desired three frequencies $f_1$, $f_2$ and $f_s + f_1$. Then the low pass filter would be chosen to filter out frequencies above $f_s + f_1$, leaving the desired three tones.

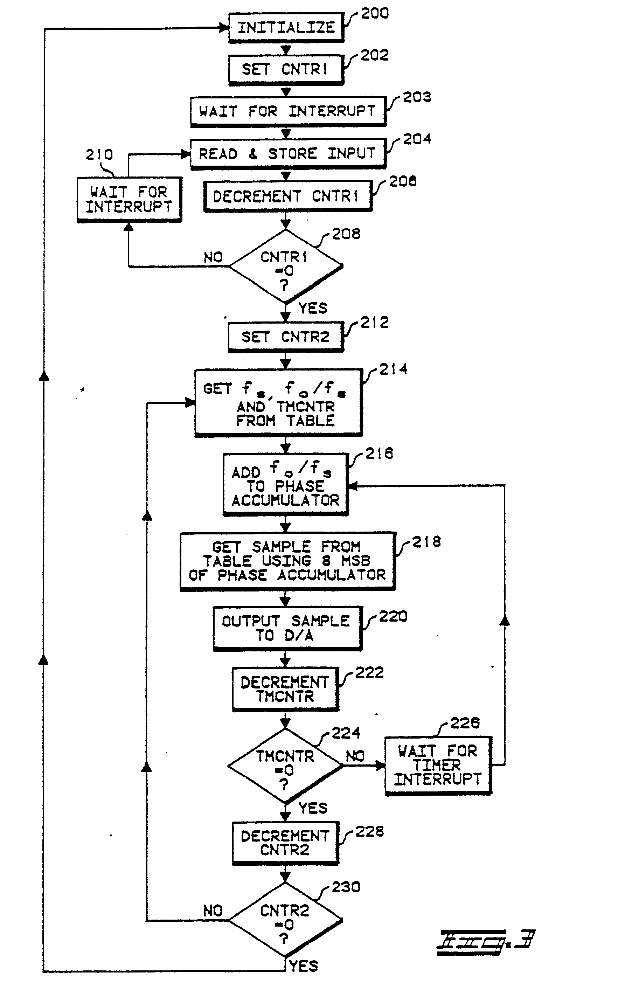

Figure 2 illustrates the preferred microprocessor implementation of the invention. An input device 110, similar to that described hereinbefore, is utilized to select the desired tone fre-

quencies $f_1$ and $f_2$. A data word and an input interrupt are coupled from the input device 110 to the CPU 120. A microcomputer, such as a MOS-TEK 3870, is preferred to implement the CPU 120. The CPU 120 determines and outputs the digital samples required to generate the desired multi-tone signal, as described in detail hereinafter. The output digital samples are then coupled, as shown, to a conventional D/A converter 130 which converts the digital samples to an analog waveform. The analog waveform is then coupled to an optional pre-emphasis filter 140 which high pass filters the waveform to provide pre-emphasis, if desired. The analog waveform is then low-pass filtered by a filter 150 to remove undesired high frequency components. The result is a multi-tone output signal of the desired frequencies.

Referring to Figure 3, there is shown a program flow diagram of the computer program for the microcomputer of Figure 2 to implement the present invention as illustrated in Figure 2. Operation of the program sequence begins by initializing values as indicated at 200 and by setting the counter variable CNTR1 to the number of input data words expected (i.e., 7 or 10 for a telephone system). The program then waits for an input interrupt at 203 from the input device 110 and in response to an interrupt reads a data word from the input device 110 (see Figure 2) and stores the data in memory, as shown at 204. The counter CNTR1 is then decremented, as shown at 206 and tested to determine if it is zero, as indicated at 208. If CNTR1 is not zero, the program flow proceeds to block 210, and waits for an input interrupt from the input device 110. In response to the interrupt the program flow returns to block 204, as shown, to read the next input data word. If, however, CNTR1 is equal to zero, this indicates that a full set of input data words has been read and the program proceeds to block 212 where the counter CNTR2 is set to the number of input data words stored. Program flow then proceeds to block 214 where, based on the first input data word, the required sample frequency $f_s$, the phase increment $f_2/f_s$ and the tone duration variable time counter TMCNTR are obtained from a table stored in memory, and the sample frequency is then used to set the timer interrupt to occur at a rate equal to $1/f_s$. The phase increment $f_2/f_s$ is then added to the accumulator as shown at block 216, and the eight most significant bits of the sum in the accumulator are then used to get the proper amplitude sample from a table of sinusoidal waveform amplitude values, thus implementing a phase accumulator synthesizer, as indicated at 218. At this point, the sample is output to the D/A converter 130 (see Figure 2), as shown at 220. Program flow proceeds to block 222 where TMCNTR is decremented and then to block 224 where TMCNTR is tested to determine if it is equal to zero. If it is not zero, indicating that the time duration of the tone is not over, program flow proceeds to block 226 and waits for the timer interrupt. When the timer interrupt occurs, the program proceeds to block 216 and generates the next sample. If TMCNTR is zero at 224, then the counter CNTR2 is decremented, as indicated at 228, and the program proceeds to test CNTR2 to determine if it is equal to zero at block 230.

If CNTR2 is not equal to zero, indicating that all the multi-tone signals have not been generated, program control returns to block 214, and the generation of the next tone pair begins. If CNTR2 is zero, then the program control returns to block 200 where the program is initialized to be ready for the next data input.

In summary, a multi-tone generator suitable for use in a telephone dialing system has been described. The generator is particularly suitable for implementation in a microcomputer and provides programability, reduced running time, and reduced complexity.

## Claims

1. A multi-tone signal generator for producing a signal composed of a plurality of desired frequencies, said generator comprising:
generating means (120 or 20, 22, 30), for generating a sequence of digital words, each word corresponding to the magnitude of a sample of a substantially periodic waveform at one of the desired frequencies; and
converter means (130) or (34), coupled to the generating means, for converting the sequence of digital words to an analog waveform,
characterized in that said generating means is adapted to generate the sequence of digital words at a sample rate less than the Nyquist rate for the highest desired frequency such that the frequency components generated include all the desired frequencies.

2. The multi-tone signal generator of claim 1, further comprising filter means (138 or 36), coupled to the converter means, for filtering the analog waveform to eliminate undesired frequency components.

3. The multi-tone signal generator of claim 2 wherein the generating means comprises a phase accumulator sine wave synthesizer (20, 22).

4. The multi-tone signal generator of claim 2 or 3 generating a dual frequency tone of frequencies f1 and f2, wherein the generating means (120 or 20, 22, 30) is adapted to generate the sequence of digital words at a sample rate of approximately f1 + f2.

5. The mutli-tone signal generator of claim 4 further comprising clock means (20), for generating sampling pulses at a rate of f1 + f2, and wherein the generating means is responsive to the clock pulses such that one digital word is generated for each clock pulse.

6. The multi-tone signal generator of claim 5, wherein the generating means (20, 22, 30) and the clock means 24 are programmable and further comprising input means (10 or 110) for programming the generating means and the clock means to the desired frequencies f1 and f2.

7. The multi-tone signal generator of claim 6 futher comprising pre-emphasis filter means (140), coupled from the converter means to the filter means, for providing pre-emphasis filtering of the multi-tone analog waveform.

8. A method of generating a multi-tone signal composed of a plurality of desired sinusoidal frequencies, comprising the steps of:
generating digitized samples of the desired sinusoidal frequencies; and
converting the digitized samples to an analog waveform,
characterized in that the step of generating comprises generating digitized samples of one of the desired sinusoidal frequencies at a sample rate less than the Nyquist rate for the highest desired frequency such that the frequency components generated include all the desired frequencies.

## Patentansprüche

1. Ein Viel-Ton-Signalgenerator zum Erzeugen eines Signals, das aus einer Mehrzahl von gewünschten Frequenzen zusammengesetzt ist, wobei der Generator folgende Merkmale aufweist;
eine Erzeugungseinrichtung (120 oder 20, 22, 30) zum Erzeugen einer Folge von Digitalworten, wobei jedes Wort der Größe eines Abtastwertes einer im wesentlichen periodischen Signalform bei einer der gewünschten frequenzen entspricht; und
einer Wandlereinrichtung (130 oder 34), die an die Generatoreinrichtung angeschlossen ist, um die Folge der Digitalworte in eine analoge Signalform umzuwandeln,
dadurch gekennzeichnet, daß die Generatoreinrichtung dazu geeignet ist, die Folge von Digitalworten mit einer Abtastrate zu erzeugen, die unterhalb der Nyquist-Rate für die höchste gewünschte Frequenz liegt, so daß die Frequenzkomponenten, die erzeugt werden, alle gewünschten Frequenzen beinhalten.

2. Der Viel-Ton-Signalgenerator nach Anspruch 1, ferner mit einer Filtereinrichtung (138 oder 36), die an die Konvertereinrichtung angeschlossen ist, um die analoge Signalform zu filtern, um ungewünschte Frequenzkomponenten zu beseitigen.

3. Der Viel-Ton-Signalgenerator nach Anspruch 2, bei dem die Generatoreinrichtung einen Phasenakkumulator-Sinuswellen-Synthesizer (20, 22) aufweist.

4. Der Viel-Ton-Signalgenerator nach Anspruch 2 oder 3, der einen doppelten Frequenzton mit den Frequenzen f1 und f2 erzeugt, bei dem die Generatoreinrichtung (120 oder 20, 22, 30) dazu geeignet ist, die Folge der Digitalworte mit einer Abtastrate von ungefähr f1 + f2 zu erzeugen.

5. Der Viel-Ton-Signalgenerator nach Anspruch 4, ferner mit einer Takteinrichtung (20) zum Erzeugen von Abtastpulsen mit einer Rate von f1 + f2, bei dem die Generatoreinrichtung auf die Taktpulse derart anspricht, daß ein Digitalwort bei jedem Taktpuls erzeugt wird.

6. Der Viel-Ton-Signalgenerator nach Anspruch 5, bei dem die Generatoreinrichtung (20, 22, 30) und die Takteinrichtung (24) programmierbar sind und der ferner eine Eingabevorrichtung (10 oder 110) aufweist, um die Generatoreinrichtung und die Takteinrichtung für die gewünschten Frequenzen f1 und f2 zu programmieren.

7. Der Viel-Ton-Signalgenerator nach Anspruch 6, ferner mit einer Vorverzerrerfiltereinrichtung (140), die zwischen der Wandlereinrichtung und der Filtereinrichtung geschaltet ist, um eine Vorverzerrerfilterung der Viel-Ton-Analogsignalform zu schaffen.

8. Ein Verfahren zum Erzeugen eines Viel-Tonsignals, das aus einer Mehrzahl von gewünschten, sinusförmigen Frequenzen besteht, mit folgenden Verfahrensschritten:

Erzeugen von digitalisierten Abtastwerten der gewünschten sinusförmigen Frequenzen; und

Wandeln der digitalisierten Abtastwerte in eine analoge Signalform,

dadurch gekennzeichnet, daß der Verfahrensschritt des Erzeugens das Erzeugen digitalisierter Abtastwerte von einer der gewünschten sinusförmigen Frequenzen mit einer Abtastrate beinhaltet, die unterhalb der Nyquist-Rate für die höchste gewünschte Frequenz liegt, so daß die erzeugten Frequenzkomponenten alle gewünschten Frequenzen beinhalten.

**Revendications**

1. Générateur de signaux de tonalités multiples destiné à produire un signal constitué par plusieurs fréquences voulues, ledit générateur comportant: un dispositif générateur (120 ou 20, 22, 30) pour produire une séquence de mots numériques, chaque mot correspondant à l'amplitude d'un échantillon d'une forme d'onde pratiquement périodique à l'une des fréquences voulues; et un dispositif convertisseur (130 ou 34) couplé avec le dispositif générateur pour convertir la séquence de mots numériques en une forme d'onde analogique, caractérisé en ce que ledit dispositif générateur est agencé pour produire la séquence de mots numériques à une fréquence d'échantillonnage inférieure à la fréquence de Nyquist pour la plus haute fréquence voulue de manière que les composantes de fréquences produites contiennent toutes les fréquences voulues.

2. Générateur de signaux à tonalités multiples selon la revendication 1, comportant en outre un filtre (138 ou 36) couplé avec le dispositif convertisseur pour filtrer la forme d'onde analogique et éliminer les composantes de fréquences indésirables.

3. Générateur de signaux à tonalités multiples selon la revendication 2, dans lequel le dispositif générateur consiste en un synthétiseur d'ondes sinusoïdales à accumulateur de phase (20, 22).

4. Générateur de signaux à tonalités multiples, selon la revendication 2 ou 3, produisant une tonalité à deux fréquences, de fréquences f1 et f2, dans lequel le dispositif générateur (120 ou 20, 22, 30) est agencé pour produire la séquence de mots numériques à une fréquence d'échantillonnage d'environ f1 + f2.

5. Générateur de signaux à tonalités multiples selon la revendication 4, comportant en outre un circuit d'horloge (20) pour produire des impulsions d'échantillonnage à une fréquence de f1 + f2 et dans lequel le dispositif générateur réagit aux impulsions d'horloge de manière qu'un mot numérique soit produit pour chaque impulsion d'horloge.

6. Générateur de signaux à tonalités multiples selon la revendication 5, dans lequel ledit dispositif générateur (20, 22, 30) et le circuit d'horloge (24) sont programmables, et comportant en outre un dispositif d'entrée (10 ou 110) pour programmer le dispositif générateur et le circuit d'horloge aux fréquences voulues f1 et f2.

7. Générateur de signaux à tonalités multiples selon la revendication 6, comportant en outre un filtre de pré-accentuation (140) couplé entre le dispositif convertisseur et le filtre pour produire un filtrage de pré-accentuation de la forme d'onde analogique à tonalités multiples.

8. Procédé de production d'un signal de tonalités multiples constitué par plusieurs fréquences sinusoïdales voulues, consistant: à produire des échantillons numérisés des fréquences sinusoïdales voulues; et à convertir les échantillons numériés en une forme d'onde analogique, caractérisé en ce que l'opération de production consiste à produire des échantillons numérisés de l'une des fréquences sinusoïdales voulues à une fréquence d'échantillonnage inférieure à la fréquence de Nyquist pour la plus haute fréquence voulue de manière que les composantes de fréquences produites contiennent toutes les fréquences voulues.

0 084 562

**Fig. 1**

10

AMPLITUDE TABLE ROM — 22

LATCH ENABLE — 30

D/A — 34

LOW PASS FILTER — 36 → OUTPUT

32

16 BIT ACCUMULATOR CL — 20

28

ENABLE PHASE INCREMENT LATCH — 14, 16

12

PROGRAMMABLE DIVIDER — 26, 18

CLOCK — 24

**Fig. 2**

110

CPU — 120

D/A — 130

PREEMPHASIS — 140

LOW PASS FILTER — 150 → OUTPUT

**0 084 562**

INITIALIZE — 200

SET CNTR1 — 202

WAIT FOR INTERRUPT — 203

READ & STORE INPUT — 204

210 — WAIT FOR INTERRUPT

DECREMENT CNTR1 — 206

CNTR1 =0 ? — 208
NO
YES

SET CNTR2 — 212

GET $f_s$, $f_o/f_s$ AND TMCNTR FROM TABLE — 214

ADD $f_o/f_s$ TO PHASE ACCUMULATOR — 216

GET SAMPLE FROM TABLE USING 8 MSB OF PHASE ACCUMULATOR — 218

OUTPUT SAMPLE TO D/A — 220

DECREMENT TMCNTR — 222

TMCNTR =0 ? — 224
NO — WAIT FOR TIMER INTERRUPT — 226
YES

DECREMENT CNTR2 — 228

CNTR2 =0 ? — 230
NO
YES

*FIG. 3*

2